# EUROPÄISCHE PATENTANMELDUNG

(11) **EP 1 013 517 A2**
(43) Veröffentlichungstag der Anmeldung: **28.06.2000**
(21) Anmeldenummer: 99124789.1
(22) Anmeldetag: 14.12.1999
(51) Int. Cl.: B60R 25/00, E05B 49/00

(54) **Verfahren und System zur Datenübertragung bei einer Sicherheitseinrichtung eines Kraftfahrzeuges**

(30) Priorität: 21.12.1998 DE 19860311; 26.01.1999 DE 19902983
(71) Anmelder: Mannesmann VDO Aktiengesellschaft, 60388 Frankfurt am Main (DE)
(72) Erfinder: Bürger, Thorsten, 65824 Schwalbach (DE)
(74) Vertreter: Rassler, Andrea, Dipl.-Phys.

(57) **Zusammenfassung**

Die Erfindung betrifft ein Verfahren zur Datenübertragung bei einer Sicherheitseinrichtung, insbesondere für Zugangs- und/oder Fahrberechtigungssysteme eines Kraftfahrzeuges, bei welchem von einer Sendeeinheit drahtlos Daten zu einer Empfängereinheit übertragen werden.

Bei einem Verfahren, bei welchem trotz berührungsloser Abfrage des Identifikationsgebers eine berechtigende Zugangsinformation von einem Dritten nicht erlangt werden kann, werden nach kapazitiver Kopplung von Sender und- Empfängereinheit die Daten mit Hilfe eines von einem kapazitiven Wechselfeld erzeugten Signals vom Sender zum Empfänger übertragen

## Beschreibung

Die Erfindung betrifft ein Verfahren zur Datenübertragung bei einer Sicherheitseinrichtung, insbesondere für Zugangs- und/oder Fahrberechtigungssysteme eines Kraftfahrzeuges, bei welchem von einer Sendeeinheit drahtlos Daten zu einer Empfängereinheit übertragen werden, sowie ein System zur Aktivierung und/oder Deaktivierung einer Sicherheitseinrichtung.

Aus der gattungsgemäßen WO 92/18732 ist eine Vorrichtung zum Betreiben einer Türverriegelungs- und/oder Alarmanlage bekannt, bei welcher vom Nutzer ein beweglicher Sender getragen wird, in dem eine codierte Information zur Aktivierung bzw. Deaktivierung der genannten Sicherheitseinrichtungen abgelegt ist. Im Kraftfahrzeug ist eine Empfängereinrichtung angeordnet, welche das vom Sender drahtlos ausgesandte Hochfrequenzsignal empfängt und mit einer in ihm abgespeicherten Sollcodierung vergleicht. Bei Übereinstimmung dieser Informationen wird ein Signal an die Türverriegelungs- und/oder Alarmanlage ausgegeben.

Das Sendersignal wird nur dann ausgesendet, wenn die den Sender tragende Person in einem vorgegebenen Abstand zum Kraftfahrzeug steht, welcher innerhalb der Reichweite des Senders liegt.

Der Sender wird dabei durch ein Signal des Empfängers ohne manuelles Eingreifen des Nutzers aktiviert. Bei der verwendeten hochfrequenten Funkverbindung ist die Information auf eine Trägerfrequenz aufmoduliert, welche im Megahertz- oder Gigahertzbereich liegt.

Die fortgeschrittenen Telekommunikationsmöglichkeiten machen es aber möglich, unbemerkt vom Fahrzeugbesitzer auch über größere Strecken den Identifikationscode berührungslos abzufragen und an das Kraftfahrzeug zu übertragen, ohne daß der Fahrzeugbesitzer etwas davon merkt.

Der Erfindung liegt somit die Aufgabe zugrunde ein Verfahren anzugeben, bei welchem trotz berührungsloser Abfrage des Identifikationsgebers eine berechtigende Zugangsinformation von einem Dritten nicht erlangt werden kann.

Erfindungsgemäß ist die Aufgabe dadurch gelöst, daß nach kapazitiver Kopplung von Sender- und Empfängereinheit die Daten mit Hilfe eines von einem kapazitiven Wechselfeld erzeugten Signales vom Sender zum Empfänger übertragen werden.

Der Vorteil der Erfindung besteht darin, daß die Übertragungsstrecke erst bei kürzester Annäherung bis auf wenige Millimeter des Benutzers, welcher den Identifikationsgeber am Körper trägt, zum Eingriff kommt. Dadurch wird eine hohe Betriebssicherheit gegenüber Manipulation durch Dritte erreicht, insbesondere wird der Mißbrauch durch eine Relais- streckenverlängerung (Relais-Attack) vorteilhaft verhindert. Die Datenübertragung und damit eine Identifizierung ist auf den Nahbereich des Bedieners beschränkt.

Vorteilhafterweise wird der Sender nach Empfang des Signales an den Empfänger über eine zweite drahtlose Übertragungsstrecke eine codierte Information aussenden, welche im Empfänger mit einer vorgegebenen codierten Information verglichen wird, wobei bei Übereinstimmung ein Ansteuersignal für die Sicherheitseinrichtung ausgegeben wird.

Erst nachdem der Identifikationsgeber durch das Startsignal geweckt wurde und sich identifiziert hat, wird in an sich bekannter Weise im Empfänger des Kraftfahrzeuges eine Plausibelisierung der codierten Information durchgeführt wird.

Die zweite, für die codierte Information vorgesehene Übertragungsstrecke wird dabei durch induktive oder Funkfernkopplung realisiert.

In einer anderen Ausgestaltung der Erfindung ist ein System zur Aktivierung und/oder Deaktivierung einer Sicherheitseinrichtung, insbesondere für Zugangs- und/oder Fahrberechtigungssysteme eines Kraftfahrzeuges vorgesehen, bei welchem zwischen einem tragbaren Sender und einem Empfänger eine codierte Information drahtlos übertragen werden, wobei die Empfängervorrichtung die empfangene Information mit einer vorgegebenen codierten Information vergleicht und bei Übereinstimmung dieser Informationen ein Ansteuersignal an die Sicherheitseinrichtung abgibt.

Zur Lösung der vorliegenden Aufgabe weist der Empfänger eine kapazitive Sendeeinheit auf, bei welcher ein erster Kondensator mit einem Wechselstromgenerator betrieben wird, wobei der Sender zum Empfang der codierten Information einen zweiten Kondensator aufweist, welcher nach erfolgter kapazitiver Kopplung das von der Sendeeinheit des Empfängers erzeugte Signal empfängt und an eine Auswerteeinrichtung des Senders weiterleitet.

Somit wird auch bei einer solchen Vorrichtung das unbemerkte Abhören des codierten Startsignales unmöglich gemacht.

In einer Weiterbildung erzeugt die Auswerteeinrichtung nach Auswertung des Startsignales eine codierte Information, welche mittels einer Fernfeldkopplung von einer Sendeeinheit des Senders zu einer Empfängereinheit des Empfängers übertragen wird.

Die codierte Information ist auf eine, von dem Wechselstromgenerator erzeugte hochfrequente Trägerfrequenz aufmoduliert.

Der Wirkungsbereich einer kapazitiven Übertragung kann auf konkrete Bereiche eingeschränkt werden. So ist der erste Kondensator zwischen der Außenhaut einer Zugangseinrichtung und einer an der Außenhaut der Zugangseinrichtung angeordneten Betätigungseinrichtung ausgebildet. Somit wird das Startsignal erst erzeugt, wenn der Benutzer beispielsweise den Türgriff des Kraftfahrzeuges betätigt.

Um zu kontrollieren, ob für eine Wegfahrsperre der richtige Identfikationsgeber vorhanden ist, ist der erste Kondensator zwischen der Fahrzeugkarosse und einen sich im Inneren des Fahrzeuges befindenden Bedienelement ausgebildet. Dieses Bedienelement kann z. B. der Schalthebel eines Kraftfahrzeuges sein.

Vorteilhafterweise wird durch die Berührung der Betätigungseinrichtung oder des Bedienelementes durch den Nutzer das durch den zweiten Kondensator zu detektierende Signal verstärkt. Auf Grund der großen Leitfähigkeit des menschlichen Körpers wirkt dieser als großflächige Kondensatorelektrode des ersten Kondensators und somit als Übertragungsmedium. Damit wird erreicht, daß der am Identifikationsgeber angeordnete zweite Kondensator die Kapazitätsänderungen des ersten Kondensators sicher wahrnimmt.

Die Erfindung läßt zahlreiche Ausführungsmöglichkeiten zu. Eine davon soll anhand der in der Zeichnung dargestellten Figuren erläutert werden.

Es zeigen:

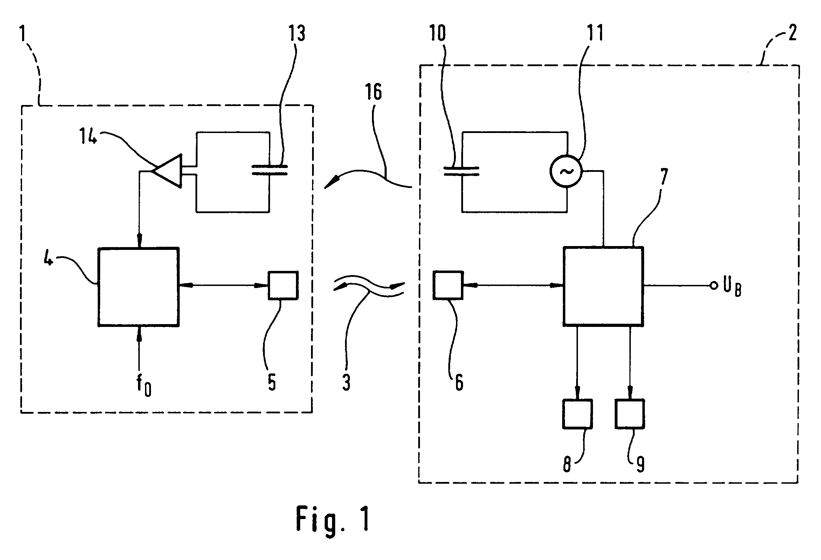

Figur 1: Erfindungsgemäße Diebstahlsicherungseinrichtung
Figur 2: Ausbildung eines kapazitiven Feldes

Gleiche Merkmale sind mit gleichen Bezugszeichen gekennzeichnet.

Bei den heute in der Entwicklung befindlichen Fahrzeugzugangs- und Fahrberechtigungssystemen wird durch eine berührungslose Abfrage eines Identifikationsgebers das Öffnen und das Starten eines Fahrzeuges wesentlich komfortabler gestaltet. Der Identifikationsgeber kann dabei beliebig am Körper (z. B. in einer Hosentasche oder einer Manteltasche) getragen werden und muß nicht explizit bedient werden.

Eine solche Sicherheitseinrichtung besteht dabei aus einem tragbaren Sender 1 und einer Empfängereinrichtung 2, welcher in einem nicht weiter dargestellten Kraftfahrzeug fest installiert ist. Zwischen dem Sender 1 und der Empfangseinrichtung 2 werden berührungslos hochfrequente Funksignale 3 ausgetauscht.

Der Sender 1 besteht dabei aus einem Sicherheitscodegeber 4, in welchem die codierte Information auf eine Trägerfrequenz f₀ von ungefähr 400 MHz aufmoduliert wird. Die so erzeugte Sicherheitsinformation wird an eine Sende-/Empfangseinrichtung 5 weitergeleitet, welche im Falle der übertragenen Funksignale 3 als Antenne ausgebildet ist. Eine ebenfalls als Antenne ausgebildete Empfangseinrichtung 6 der Empfängereinrichtung 2 empfängt das Funksignal 3 und leitet es an ein Steuergerät 7 des Kraftfahrzeuges weiter, welches das codierte Signal mit einen in ihm gespeicherten Sollcodesignal vergleicht. Bei Übereinstimmung dieser Informationen gibt das Steuergerät 7 entweder ein Ansteuersignal an die Zentralverriegelung 8 des Kraftfahrzeuges zum Öffnen bzw. Verschließen der Fahrzeugtüren und/oder an eine Wegfahrsperre 9 zur Aktivierung bzw. Deaktivierung des Antriebes des Kraftfahrzeuges aus.

Das Aussenden der codierten Informationen wird vom Sender 1 aber erst initiiert, wenn der Sender 1 von der Empfängereinrichtung 2 ein Startsignal 16 erhält.

Zur Erzeugung dieses Startsignales 16 ist in der Empfängereinrichtung 2 ein Kondensator 10 angeordnet, welcher mit einem Wechselstromgenerator 11 betrieben wird. Dieser Wechselstromgenerator 11 kann dabei ständig oder nur in vorgegebenen Zeiträumen aktiviert werden. Zur gleichzeitigen Datenübertragung kann dabei auf die vom Wechselstromgenerator erzeugte Trägerfrequenz ein die Daten enthaltendes Signal aufmoduliert werden.

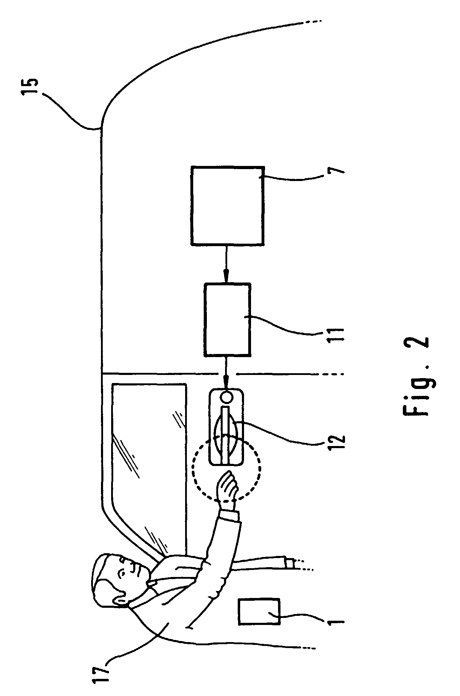

Wie aus Figur 2 ersichtlich, werden die Kondensatorelektroden des Kondensator 10 durch die Fahrzeugkarosserie 15 und eine Metallplatte 12 gebildet, in einen Türgriff des Kraftfahrzeuges eingelassen ist.

Analog dazu befindet sich in der Sendereinrichtung 1 ein Kondensator 13, welcher über eine Verstärkereinrichtung 14 mit dem Sollcodegeber 4 verbunden ist.

Das Startsignal 16 wird in folgender Weise erzeugt: Nähert sich der Nutzer dem Kraftfahrzeug so wird der Kondensator 13 des Senders 1 bei unmittelbarer Nähe oder bei Berührung des Türgriffes in das von dem Kondensator 10 zwischen dem Türgriff und der Fahrzeugkarosserie aufgebaute elektrische Feld eintauchen. Durch die ständige Änderung dieses Feldes infolge der Ansteuerung über dem Wechselstromgenerator wird die Variation des Feldes durch den Kondensator 13 der Sendeeinheit 1 detektiert. Dieser erzeugt ein den Änderungen entsprechendes Signal, welches durch den Verstärker 14 verstärkt und an den Sollcodegeber 4, welcher vorzugsweise als Mikrocontroller ausgebildet ist, weitergeleitet wird.

Dieser Effekt wird noch dadurch verstärkt, daß der Benutzer 17 selbst als Übertragungsstrecke zwischen Sender 1 und Empfänger 2 dient, indem die kapazitive Kopplung durch die Leitfähigkeit seines Körper noch weiter verstärkt wird.

Auf Anwesenheitsdetektoren, wie sie zur Auslösung des Startsignales genutzt werden, kann vollständig verzichtet werden.

## Patentansprüche

1. Verfahren zur Datenübertragung bei einer Sicherheitseinrichtung, insbesondere für Zugangs- und/oder Fahrberechtigungssysteme eines Kraftfahrzeuges, bei welchem von einer Sendeeinheit drahtlos Daten zu einer Empfängereinheit übertragen werden, **dadurch gekennzeichnet**, daß nach kapazitiver Kopplung von Sender- und Empfängereinheit die Daten mit Hilfe eines, von einem kapazitiven Wechselfeld erzeugten Signales vom Sender zum Empfänger übertragen werden.

2. Verfahren nach Anspruch 1, **dadurch gekennzeichnet**, daß ein Sender nach Empfang des Signales über eine zweite drahtlose Übertragungsstrecke eine codierte Information an einen Empfänger aussendet, welche im Empfänger mit einer vorgegeben codierten Information verglichen wird und bei Übereinstimmung ein Ansteuersignal für die Sicherheitseinrichtung ausgegeben wird.

3. Verfahren nach Anspruch 2, **dadurch gekennzeichnet**, daß die zweite Übertragungsstrecke für die codierte Information durch induktive oder Funkkopplung realisiert wird.

4. System zur Aktivierung und/oder Deaktivierung einer Sicherheitseinrichtung, insbesondere für Zugangs- und/oder Fahrberechtigungssysteme eines Kraftfahrzeuges, bei welchem zwischen einem tragbaren Sender und einem Empfänger eine codierte Information drahtlos übertragen wird, wobei der Empfänger die empfangene Information mit einer vorgegebenen codierten Information vergleicht und bei Übereinstimmung dieser Informationen ein Ansteuersignal an die Sicherheitseinrichtung abgibt, **dadurch gekennzeichnet**, daß der Empfänger (2) eine kapazitive Sendeeinheit (10, 11) aufweist, welche durch ein kapazitives Wechselfeld ein Startsignal (16) erzeugt und zur Empfängereinheit (13) des Senders (1) überträgt.

5. System nach Anspruch 4, **dadurch gekennzeichnet**, daß die kapazitive Sendeeinheit (10, 11) des Empfängers (2) aus einem ersten Kondensator (10) besteht, welcher mit einem Wechselstromgenerator (11) betrieben wird, wobei der Sender (1) zum Empfang des Startsignals (16) einen zweiten Kondensator (13) aufweist, welcher bei kapazitiver Kopplung zwischen Sender (1) und Empfänger (2) das von der Sendeeinheit (10,11) des Empfängers (2) erzeugte Signal empfängt und an eine Auswerteeinrichtung (4) des Senders (1) weiterleitet.

6. System nach Anspruch 4, **dadurch gekennzeichnet**, daß die Auswerteeinrichtung (4) nach Auswertung des Startsignales (16) eine codierte Information (3) erzeugt, welche von einer Sendeeinheit (5) des Senders (1) an eine Empfängereinheit (6) des Empfängers (2) mittels induktiver oder Fernfeldkopplung übertragbar ist.

7. System nach Anspruch 4, **dadurch gekennzeichnet**, daß die codierte Information (3) auf eine von dem Wechselstromgenerator (11) erzeugte hochfrequente Trägerfrequenz aufmoduliert ist.

8. System nach Anspruch 5, **dadurch gekennzeichnet**, daß der erste Kondensator (10) zwischen der Außenhaut (15) einer Zugangseinrichtung und einer an der Außenhaut der Zugangseinrichtung angeordneten Betätigungseinrichtung (12) ausgebildet ist.

9. System nach Anspruch 5, **dadurch gekennzeichnet**, daß der erste Kondensator (10) zwischen der Fahrzeugkarosse und einen im Inneren des Kraftfahrzeuges angeordneten Bedienelement ausgebildet ist.

10. System nach Anspruch 8 oder 9, **dadurch gekennzeichnet**, daß bei Berührung der Betätigungseinrichtung (12) oder des Bedienelementes durch den Nutzer das durch den zweiten Kondensator (13) zu detektierende Signal verstärkt wird.
